# EUROPEAN PATENT SPECIFICATION

(11) **EP 3 700 300 B1**
(45) Date of publication and mention of the grant of the patent: **18.06.2025**
(21) Application number: 18868728.9
(22) Date of filing: 05.09.2018
(51) Int. Cl.: H05B 6/14, D02J 1/22, F16C 13/00, D01D 5/16, D01D 10/02, D02J 13/00, F16C 41/00

(54) **INDUCTION HEATING ROLLER AND SPUN YARN DRAWING DEVICE**
INDUKTIONSHEIZWALZE UND SPINNFADENZIEHVORRICHTUNG
ROULEAU CHAUFFANT PAR INDUCTION ET DISPOSITIF D'ÉTIRAGE DE FILÉ DE FIBRES

(30) Priority: 17.10.2017 JP 2017200810; 23.02.2018 JP 2018030816; 04.04.2018 JP 2018072511
(43) Date of publication of application: 26.08.2020
(73) Proprietor: TMT Machinery, Inc., Osaka-shi, Osaka 541-0041 (JP)
(72) Inventor: KAGATA, Kakeru, Kyoto-shi Kyoto 612-8686 (JP); MORINAGA, Ryo, Kyoto-shi Kyoto 612-8686 (JP)
(74) Representative: Hoffmann Eitle
(86) International application number: PCT/JP2018/032854
(87) International publication number: WO 2019/077899

(56) References cited:
- EP-A1- 2 664 428
- DE-A1- 102012 206 798
- JP-A- H0 246 311
- JP-A- H09 127 810
- JP-A- S54 157 354
- JP-U- S52 117 662
- JP-U- S52 117 662
- US-A- 4 208 560

## Description

### [Technical Field]

The present invention relates to an induction heating roller and a spun yarn drawing device including the induction heating roller.

### [Background Art]

For example, an induction heating roller recited in Japanese Laid-Open Patent Publication No. 54-106617 is arranged such that a heater with a coil is provided inside a roller main body made of a magnetic material, and an outer cylindrical part (heating target) of the roller main body is induction-heated as an alternate current is supplied to the coil. To be more specific, a front lid (hereinafter, end face part) is connected to an end portion of the outer cylindrical part on one end side in the axial direction, whereas a magnetic yoke is provided to be adjacent to the other end side of the outer cylindrical part in the axial direction. When an alternate current is supplied to the coil, an alternating magnetic flux is generated to pass through the iron core of the heater, the end face part, the outer cylindrical part, and the magnetic yoke. As a result, an eddy current is generated by electromagnetic induction to flow in the outer cylindrical part in the circumferential direction, and the outer cylindrical part is heated by Joule heat generated by the eddy current.

Further examples of the prior art can be seen in documents DE 10 2012 206798 A1, JP S52 117662 U, US 4 208 560 A and EP 2 664 428 A1.[Summary of Invention]

### [Technical Problem]

Because a magnetic flux has a characteristic of traveling the shortest path, the magnetic flux mainly passes through a location inside a corner portion between the outer cylindrical part and the end face part. For this reason, when the end face part is thick to some extent, the magnetic flux scarcely passes through the one end side of the end face part and the outer cylindrical part, with the result that the one end portion of the roller main body is not sufficiently heated. As a result, the temperature distribution in the axial direction of the outer circumferential surface (roller surface) of the roller main body is disadvantageously uneven. If the thickness of the end face part is reduced, the magnetic flux passes through the one end side of the end face part and the outer cylindrical part. Because heat generation at the one end portion of the roller main body is facilitated, the temperature distribution of the roller surface is improved. In this case, however, the rigidity of the end face part is decreased and hence the strength of the roller main body is decreased.

To solve the problem above, an object of an induction heating roller of the present invention is to equalize the temperature distribution in the axial direction of a roller surface while suppressing decrease in strength of a roller main body.

### [Solution to Problem]

An induction heating roller of the present invention includes: a roller main body including a cylindrical heating target and an end face part connected to an end portion of the heating target on one end side in an axial direction; and a heater including a coil which is provided inside the roller main body, the heating target being induction-heated as an alternate current is supplied to the coil, and in a region between the heating target and the heater in a radial direction in an inner surface of the end face part, a groove portion being formed to extend in a circumferential direction.

In the present invention, a magnetic flux passing through the end face part makes a detour toward the one end side in the axial direction to circumvent the groove portion. It is therefore possible to facilitate heat generation at the one end portion of the roller main body, so as to improve the temperature distribution in the axial direction of the roller surface. Furthermore, because merely the groove portion is formed in a part of the inner surface of the end face part, the rigidity of the end face part is not significantly lowered. In this way, the present invention makes it possible to equalize the temperature distribution in the axial direction of the roller surface while suppressing deterioration in strength of the roller main body.

In the present invention, preferably, the groove portion is an uninterrupted annular groove extending in the circumferential direction.

Because the groove portion is annular, heat generation at the one end portion of the roller main body is facilitated at every part in the circumferential direction. It is therefore possible to effectively equalize the temperature distribution in the axial direction of the roller surface.

In the present invention, preferably, the groove portion is formed to be adjacent to the heating target.

When the groove portion is adjacent to the heating target, the magnetic flux which makes a detour toward the one end side to circumvent the groove portion passes through the one end portion of the heating target. Heat generation at the one end portion of the heating target is therefore facilitated, and the temperature distribution in the axial direction of the roller surface is further effectively equalized.

In the present invention, preferably, the groove portion is formed only in the region between the heating target and the heater in the radial direction, in the inner surface of the end face part.

Because the range of the formation of the groove portion is limited to the region between the heating target and the heater, decrease in rigidity of the end face part is suppressed and hence decrease in strength of the roller main body is suppressed.

In the present invention, preferably, the groove portion is deepest at an outermost part in the radial direction.

Because the depth of the groove portion is arranged in this way, the capacity of the groove portion is small. For this reason, decrease in rigidity of the end face part is suppressed and hence decrease in strength of the roller main body is suppressed. Furthermore, because the groove portion is deepest at the outermost part in the radial direction, the magnetic flux circumventing the deepest part of the groove portion toward the one end side is guided to pass through the one end portion of the heating target. Heat generation at the one end portion of the heating target is therefore facilitated, and the temperature distribution in the axial direction of the roller surface is further effectively equalized.

In the present invention, preferably, a part of the end face part where the groove portion is not formed is thicker than the heating target.

This arrangement makes it possible to increase the rigidity of the end face part, and therefore to increase the strength of the roller main body.

In the present invention, preferably, the minimum thickness of a part of the end face part where the groove portion is formed is less than the thickness of the heating target.

With this arrangement, the path of the magnetic flux passing at the deepest part of the groove portion (i.e., the thinnest part of the end face part) is further shifted to the one end side. Heat generation at the one end portion of the roller main body is therefore further facilitated, and the temperature distribution in the axial direction of the roller surface is further effectively equalized.

In the present invention, preferably, the minimum thickness of the part of the end face part where the groove portion is formed is 3 millimeters or more.

This arrangement makes it possible to avoid saturation of the magnetic flux at the thinnest part of the end face part, and to suppress the decrease in efficiency of the induction heating.

In the present invention, preferably, the groove portion is filled with a non-magnetic member. As the non-magnetic member, a part of a heat equalizing member is inserted into the groove portion.

As compared to a case where the groove portion is a void space, it is possible to increase the rigidity of the end face part, and therefore to increase the strength of the roller main body.

In the present invention, the induction heating roller further includes a non-magnetic heat equalizing member which is provided to be in contact with an inner circumferential surface of the heating target and is higher in thermal conductivity in the axial direction than at least the inner circumferential surface of the heating target.

Because of this heat equalizing member, it is possible to further effectively equalize the temperature distribution in the axial direction of the roller surface. Furthermore, the groove portion is advantageously reinforced by the heat equalizing member.

In the present invention, the heat equalizing member is made of a fiber composite material.

When the orientation of fibers in the fiber composite material is suitably arranged, the physical properties such as thermal conductivity and electric resistivity are anisotropic. The fiber composite material arranged in this way is suitable as a material of the heat equalizing member.

In an example which is not part of the present invention, the heat equalizing member is made of a non-magnetic metal material which is higher in thermal conductivity than at least the inner circumferential surface of the heating target.

Processing of metal materials is typically easier than processing of fiber composite materials. For this reason, the heat equalizing member can be easily shaped when the heat equalizing member is made of a metal material.

In the present invention, preferably, the roller main body is cantilevered at an end portion on the other end side in the axial direction.

When the roller main body is cantilevered at an end portion on the other end side, the one end portion of the roller main body is a free end exposed to the outside air, and the temperature of the roller surface tends to significantly decrease. The present invention which makes it possible to facilitate heat generation at the one end portion of the roller main body is therefore particularly effective.

A spun yarn drawing device of the present invention includes any one of the above-described induction heating rollers, yarns being wound on an outer circumferential surface of the roller main body to be aligned in the axial direction.

In the present invention, it is possible to equalize the temperature distribution in the axial direction of the roller surface. The yarns wound on the roller main body are evenly heated, differences in quality between the yarns are suppressed, and consequently the quality of the yarns is improved.

### [Brief Description of Drawings]

FIG. 1 is a schematic diagram of a spun yarn take-up machine including an induction heating roller of an embodiment.
FIG. 2 is a cross section of the induction heating roller of the embodiment, which is taken along an axial direction.
FIG. 3 is a table of physical properties of a roller main body and a heat equalizing member of the embodiment.
FIG. 4 includes a partial enlarged cross section of the induction heating roller of the embodiment and a graph showing the temperature distribution of a roller surface.
FIG. 5 is a cross section of an induction heating roller of a modification.
FIG. 6 is a cross section of an induction heating roller of a modification.
FIG. 7 is a cross section of an induction heating roller of a modification.
FIG. 8 includes a partial enlarged cross section of a known induction heating roller and a graph showing the temperature distribution of a roller surface.

### [Description of Embodiments]

### (Spun Yarn Take-Up Machine)

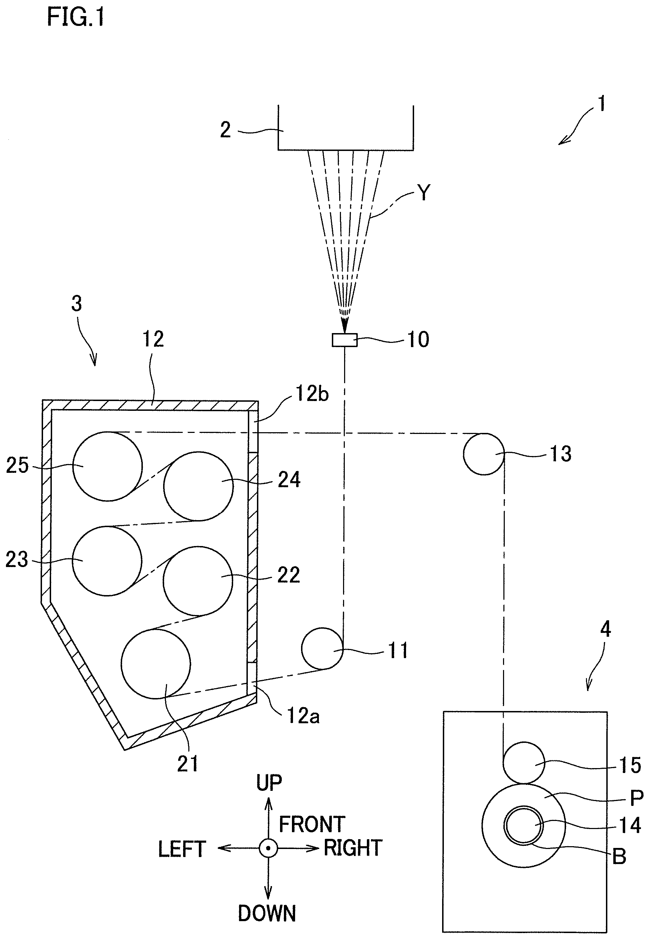

The following will describe an embodiment of the present invention. FIG. 1 is a schematic diagram of a spun yarn take-up machine including an induction heating roller of the present embodiment. As shown in FIG. 1, the spun yarn take-up machine 1 is configured to draw, by a spun yarn drawing device 3, plural (six in this embodiment) yarns Y serially spun out from a spinning apparatus 2 and made of a solidified molten fibrous material such as polyester, and then to wind the yarns Y by a yarn winding apparatus 4. Hereinafter, explanations will be given with reference to the directions shown in the figures.

The spinning apparatus 2 is configured to generate the yarns Y by continuously spinning out a molten fibrous material such as polyester. To the yarns Y spun out from the spinning apparatus 2, oil is applied at an oil guide 10. The yarns Y are then sent to the spun yarn drawing device 3 via a guide roller 11.

The spun yarn drawing device 3 is an apparatus for heating and drawing the yarns Y and is provided below the spinning apparatus 2. The spun yarn drawing device 3 includes plural (five in this embodiment) godet rollers 21 to 25 housed in a thermal insulation box 12. The godet rollers 21 to 25 are induction heating rollers which are rotationally driven by a motor and are induction-heated by power supply to a coil. Yarns Y are wound onto the godet rollers 21 to 25. At a lower part of a right side portion of the thermal insulation box 12, an inlet 12a is formed to introduce yarns Y into the thermal insulation box 12. At an upper part of the right side portion of the thermal insulation box 12, an outlet 12b is formed to take yarns Y out from the thermal insulation box 12. The yarns Y are wound onto each of the godet rollers 21 to 25 at a winding angle of less than 360 degrees. The yarns Y are wound onto the godet rollers 21 to 25 in order, from the lowest godet roller 21.

The lower three godet rollers 21 to 23 are preheating rollers for preliminarily heating the yarns Y before drawing them. The roller surface temperature of each of these rollers is arranged to be equal to or higher than the glass transition temperature of the yarns Y (e.g., set at about 90 to 100 degrees centigrade). Meanwhile, the upper two godet rollers 24 and 25 are conditioning rollers for thermally setting the drawn yarns Y. The roller surface temperature of each of these rollers is arranged to be higher than the roller surface temperatures of the lower three godet rollers 21 to 23 (e.g., set at about 150 to 200 degrees centigrade). The yarn feeding speeds of the upper two godet rollers 24 and 25 are higher than those of the lower three godet rollers 21 to 23.

The yarns Y introduced into the thermal insulation box 12 through the inlet 12a are, to begin with, preliminarily heated to a drawable temperature while being transferred by the godet rollers 21 to 23. The preliminarily-heated yarns Y are drawn on account of a difference in yarn feeding speed between the godet roller 23 and the godet roller 24. The yarns Y are then further heated while being transferred by the godet rollers 24 and 25, with the result that the drawn state is thermally set. The yarns Y having been drawn in this way go out from the thermal insulation box 12 through the outlet 12b.

The yarns Y drawn by the spun yarn drawing device 3 are sent to the yarn winding apparatus 4 via a guide roller 13. The yarn winding apparatus 4 is an apparatus for winding the yarns Y and is provided below the spun yarn drawing device 3. The yarn winding apparatus 4 includes members such as a bobbin holder 14 and a contact roller 15. The bobbin holder 14 is cylindrical in shape and extends in the front-rear direction. The bobbin holder 14 is rotationally driven by an unillustrated motor. To the bobbin holder 14, bobbins B are attached along the axial direction to be side by side. By rotating the bobbin holder 14, the yarn winding apparatus 4 simultaneously winds the yarns Y onto the bobbins B, so as to produce packages P. The contact roller 15 makes contact with the surfaces of the packages P to adjust the shape of each package P by applying a predetermined contact pressure to each package P.

### (Induction Heating Roller)

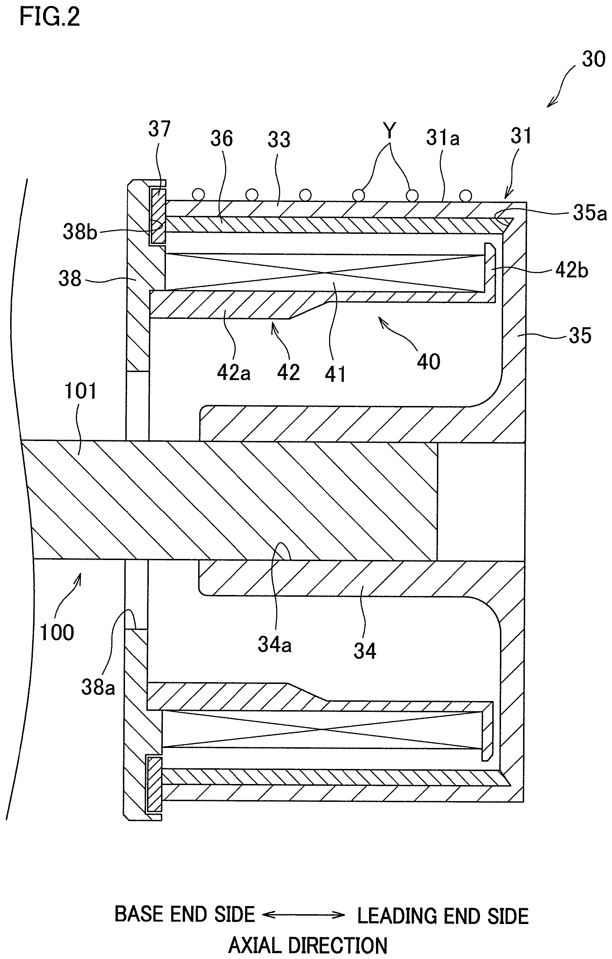

The following will describe an induction heating roller 30 which is used as the godet rollers 21 to 25, with reference to FIG. 2. FIG. 2 is a cross section of the induction heating roller 30 of the present embodiment, which is taken along an axial direction. A roller main body 31 of the induction heating roller 30 is cantilevered by a motor 100 which rotationally drives the roller main body 31. Hereinafter, a direction in which the cylindrical roller main body 31 extends (i.e., the left-right direction in FIG. 2) will be referred to as an axial direction. In the axial direction, the leading end side of the roller main body 31 (i.e., the right side in FIG. 2) is equivalent to one end side in the present invention, whereas the base end side opposite to the leading end side (i.e., the left side in FIG. 2) is equivalent to the other end side in the present invention. Furthermore, the radial direction of the roller main body 31 may be simply referred to as radial direction, and the circumferential direction of the roller main body 31 may be simply referred to as circumferential direction.

The induction heating roller 30 includes a cylindrical roller main body 31 extending in the axial direction and a heater 40 which is configured to heat an outer circumferential surface (hereinafter, a roller surface 31a) of the roller main body 31. The induction heating roller 30 is configured to heat the roller surface 31a by induction heating by a coil 41 provided in the heater 40. With this, yarns Y wound on the roller surface 31a to be aligned in the axial direction are heated.

The roller main body 31 is made of carbon steel which is a magnetic body and a conductor. The roller main body 31 is arranged such that a cylindrical outer cylindrical part 33, a cylindrical shaft center part 34, and a disc-shaped end face part 35 are integrally formed. The outer cylindrical part 33 is provided radially outside the coil 41. The shaft center part 34 is provided radially inside the coil 41. The end face part 35 connects a leading end portion of the heating target 33 with a leading end portion of the shaft center part 34. In this regard, when each of the outer cylindrical part 33 and the end face part 35 is a magnetic body and a conductor, the outer cylindrical part 33 and the end face part 35 may be made of different materials. Even when the outer cylindrical part 33 and the end face part 35 are made of the same material, the outer cylindrical part 33 and the end face part 35 may be different members. The base end side of the roller main body 31 is open, and an output shaft 101 of the motor 100 is inserted through this opening into the roller main body 31.

At the shaft center part 34 of the roller main body 31, a shaft inserting hole 34a is formed to extend along the axial direction. To the shaft inserting hole 34a, the output shaft 101 of the motor 100 inserted from the base end side is fixed by unillustrated fixing means. As a result, the base end portion of the roller main body 31 is cantilevered by the output shaft 101 of the motor 100, and hence the roller main body 31 and the output shaft 101 are rotatable together.

In the present embodiment, in order to efficiently heat the roller surface 31a, the outer cylindrical part 33 is thin to some degree, i.e., about 6 to 8 millimeters in thickness. When the end face part 35 is more or less as thick as the outer cylindrical part 33, the strength of the roller main body 31 may be insufficient. For this reason, the end face part 35 is thicker than the outer cylindrical part 33, i.e., about 8 to 10 millimeters in thickness. This thickness is a mere example, and the outer cylindrical part 33 may be as thick as or thicker than the end face part 35.

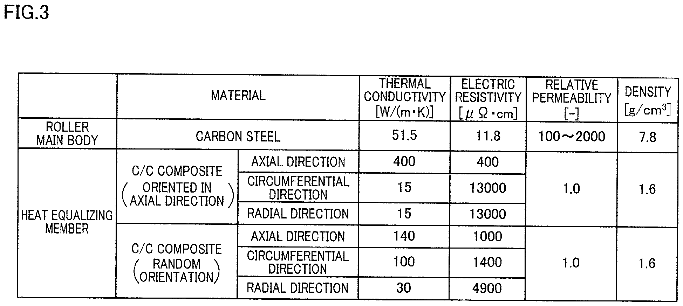

Inside the roller main body 31, a cylindrical heat equalizing member 36 is provided to be in contact with an inner circumferential surface of the outer cylindrical part 33. The heat equalizing member 36 is made of C/C composite (carbon fiber reinforced-carbon matrix-composite) including carbon fibers and graphite, for example. FIG. 3 is a table of physical properties of the roller main body 31 and the heat equalizing member 36 of the present embodiment. In the C/C composite of which the heat equalizing member 36 made, carbon fibers are oriented in the axial direction or oriented randomly. For this reason, as shown in FIG. 3, the thermal conductivity in the axial direction of the heat equalizing member 36 is higher than the thermal conductivity of the roller main body 31 (at least the thermal conductivity of the inner circumferential surface of the outer cylindrical part 33). The heat equalizing member 36 is therefore able to equalize the temperature distribution in the axial direction of the roller surface 31a. Furthermore, because the electric resistivity in the circumferential direction of the heat equalizing member 36 is higher than the electric resistivity of the outer cylindrical part 33, an eddy current is less likely to flow in the heat equalizing member 36. Furthermore, because the C/C composite is a non-magnetic material, the magnetic flux scarcely passes through the heat equalizing member 36. Induction heating of the heat equalizing member 36 is therefore suppressed.

Referring back to FIG. 2, the outer diameter of the heat equalizing member 36 is substantially identical with the inner diameter of the outer cylindrical part 33, and the outer circumferential surface of the heat equalizing member 36 is substantially entirely in contact with the inner circumferential surface of the outer cylindrical part 33. The length in the axial direction of the heat equalizing member 36 is substantially identical with the length of the outer cylindrical part 33 of the roller main body 31. A leading end portion of the heat equalizing member 36 is inserted into a later-described groove portion 35a. A base end portion of the heat equalizing member 36 is fixed to a base end portion of the outer cylindrical part 33 by an annular fixing ring 37. The fixing ring 37 is made of, for example, a magnetic material such as carbon steel.

A flange 38 is provided on the base end side of the roller main body 31. The flange 38 is a magnetic body and is, for example, made of carbon steel in the same manner as the roller main body 31. The flange 38 is a disc-shaped member, and a through hole 38a is formed at a central part of the flange 38 to allow the output shaft 101 of the motor 100 to be inserted. The flange 38 extends radially outward as compared to the coil 41. An annular groove 38b is formed in an inner surface of a peripheral edge portion of the flange 38. In this annular groove 38b, the above-described fixing ring 37 is provided not to make contact with surfaces constituting annular groove 38b.

The heater 40 will be described. The heater 40 includes a coil 41 and a bobbin member 42. The coil 41 is provided for induction heating of the roller main body 31. The coil 41 is wound onto the cylindrical bobbin member 42. In the radial direction, the coil 41 is provided inside the outer cylindrical part 33 of the roller main body 31 and outside the shaft center part 34.

The bobbin member 42 is made of carbon steel in the same manner as the roller main body 31, for example. The bobbin member 42 includes a cylindrical iron core portion 42a on which the coil 41 is wound and a flange portion 42b which protrudes radially outward from a leading end portion of the iron core portion 42a. A leading end portion of the bobbin member 42 is slightly separated from the end face part 35, and a base end portion of the bobbin member 42 is attached to the flange 38. Although not illustrated, the bobbin member 42 is partially cut out in the circumferential direction and is therefore C-shaped in cross section. For this reason, an eddy current is unlikely to flow in the bobbin member 42, with the result that induction heating of the bobbin member 42 is suppressed.

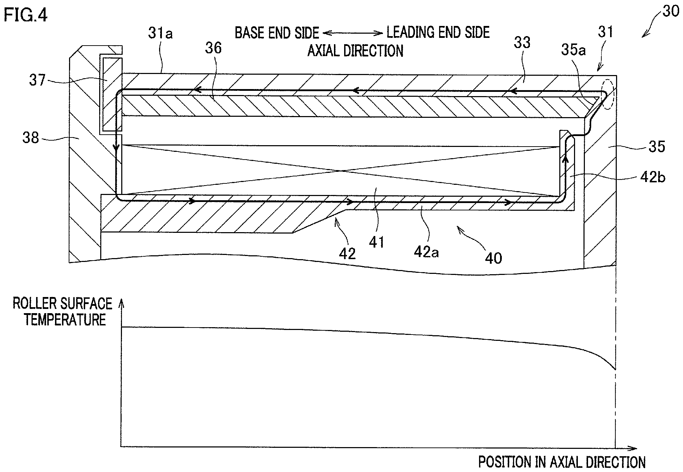

FIG. 4 includes a partial enlarged cross section of the induction heating roller 30 of the present embodiment and a graph showing the temperature distribution of the roller surface. When a highfrequency current is supplied to the coil 41, a variable magnetic field is generated around the coil 41. As a result, an eddy current is generated by electromagnetic induction to flow in the outer cylindrical part 33 of the roller main body 31 in the circumferential direction, and the outer cylindrical part 33 is heated by Joule heat generated by the eddy current. Consequently, the temperature of the roller surface 31a increases. At this stage, as indicated by arrows in FIG. 4, a magnetic flux circuit is formed to pass through the iron core portion 42a of the bobbin member 42, the flange portion 42b of the bobbin member 42, the end face part 35 of the roller main body 31, the outer cylindrical part 33 of the roller main body 31, the fixing ring 37, and the flange 38. The direction of the magnetic flux changes when the direction of the current changes.

### (Problems of Known Art)

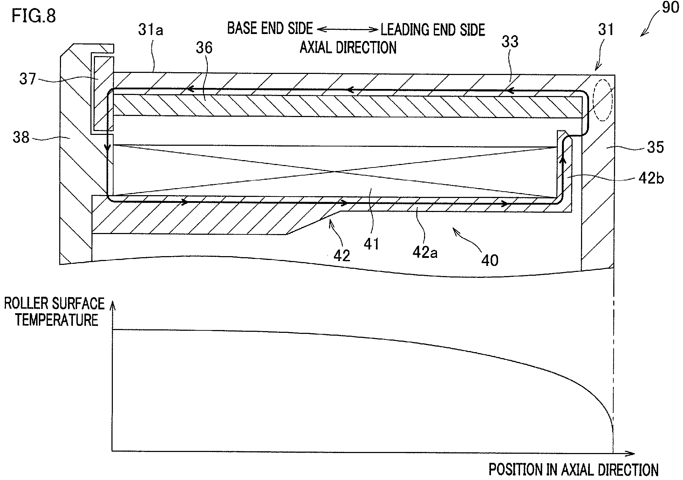

FIG. 8 includes a partial enlarged cross section of a known induction heating roller 90 and a graph showing the temperature distribution of a roller surface 31a. It should be noted that the components having the same structures as those of the induction heating roller 30 of the embodiment above are given the same reference numerals.

Because a magnetic flux has a characteristic of traveling the shortest path, the magnetic flux mainly passes through a location inside a corner portion between the outer cylindrical part 33 and the end face part 35. For this reason, when the end face part 35 is thick to some extent, the magnetic flux scarcely passes through the leading end portion (indicated by a broken line in FIG. 8) of the outer cylindrical part 33, with the result that the leading end portion of the outer cylindrical part 33 is not sufficiently heated. As a result, the temperature of the roller surface 31a is rapidly decreased at the leading end portion, and hence the temperature distribution in the axial direction is uneven. This problem is particularly conspicuous when the roller main body 31 is cantilevered by the motor 100 and the leading end portion of the roller main body 31 is exposed to the outside air.

If the thickness of the end face part 35 is reduced, the magnetic flux passes through the leading end portion of the outer cylindrical part 33. Because the leading end portion of the outer cylindrical part 33 is heated, the temperature distribution of the roller surface 31a is improved. In this case, however, the rigidity of the end face part 35 is decreased and hence the strength of the roller main body 31 is decreased.

### (Structure of Groove Portion)

To solve the problem above, in the present embodiment, as shown in FIG. 4, a groove portion 35a is formed between the outer cylindrical part 33 and the heater 40 in the radial direction in the inner surface of the end face part 35 of the roller main body 31, to be more specific, formed in a part of a region between the inner circumferential surface of the outer cylindrical part 33 and a radially outer end of the flange portion 42b of the bobbin member 42 in the radial direction. This groove portion 35a is formed to be adjacent to the outer cylindrical part 33 and annularly extends in the circumferential direction in an uninterrupted manner. In the groove portion 35a, a leading end portion of the heat equalizing member 36 is inserted.

Even though the heat equalizing member 36 is inserted into the groove portion 35a, a magnetic flux scarcely passes through the heat equalizing member 36 because the heat equalizing member 36 is a non-magnetic body. The magnetic flux therefore makes a detour toward the leading end side of the end face part 35 and outer cylindrical part 33 of the roller main body 31 in order to circumvent the groove portion 35a (heat equalizing member 36) (see a part indicated by a broken line in FIG. 4). As a result, an amount of heat generated at the leading end portion of the outer cylindrical part 33 is increased, and hence the temperature distribution of the roller surface 31a is equalized.

The groove portion 35a of the present embodiment is triangular in shape in a cross section orthogonal to the circumferential direction, and is narrowed radially outward in a tapered manner. In other words, the groove portion 35a is deepest at the outermost part in the radial direction. This arrangement facilitates the magnetic flux, which makes a detour toward the leading end side to circumvent the groove portion 35a, to pass through the leading end portion of the outer cylindrical part 33. It is therefore possible to efficiently heat the leading end portion of the outer cylindrical part 33. The minimum thickness of the part of the end face part 35 where the groove portion 35a is formed (i.e., the thickness at the deepest part of the groove portion 35a) is, for example, about 3 to 5 millimeters. This thickness is less than the thickness (about 6 to 8 millimeters) of the outer cylindrical part 33. The less the minimum thickness is, the more the path of the magnetic flux is shifted to the leading end side. However, when the minimum thickness is excessively short, the magnetic flux is saturated and the heating efficiency is deteriorated. The minimum thickness is therefore preferably 3 millimeters or more.

### (Advantageous Effects)

In the induction heating roller 30 of the present embodiment, the groove portion 35a extending in the circumferential direction is formed in the region between the outer cylindrical part 33 (equivalent to the heating target of the present invention) and the heater 40 in the radial direction in the inner surface of the end face part 35 of the roller main body 31. With this arrangement, the magnetic flux passing through the end face part 35 makes a detour toward the leading end side (one end side) in the axial direction to circumvent the groove portion 35a. It is therefore possible to facilitate heat generation at the leading end portion of the roller main body 31, so as to improve the temperature distribution in the axial direction of the roller surface 31a. Furthermore, because merely the groove portion 35a is formed in a part of the inner surface of the end face part 35, the rigidity of the end face part 35 is not significantly lowered. In this way, the induction heating roller 30 of the present embodiment makes it possible to equalize the temperature distribution in the axial direction of the roller surface 31a while suppressing deterioration in strength of the roller main body 31.

In the present embodiment, the groove portion 35a is an uninterrupted annular groove extending in the circumferential direction. Because the groove portion 35a is annular, heat generation at the leading end portion of the roller main body 31 is facilitated at every part in the circumferential direction. It is therefore possible to effectively equalize the temperature distribution in the axial direction of the roller surface 31a.

In the present embodiment, the groove portion 35a is formed to be adjacent to the outer cylindrical part 33. When the groove portion 35a is adjacent to the outer cylindrical part 33, the magnetic flux which makes a detour toward the leading end side to circumvent the groove portion 35a passes through the leading end portion of the outer cylindrical part 33. Heat generation at the leading end portion of the outer cylindrical part 33 is therefore facilitated, and the temperature distribution in the axial direction of the roller surface 31a is further effectively equalized.

In the present embodiment, the groove portion 35a is formed only in the region between the outer cylindrical part 33 and the heater 40 in the radial direction, in the inner surface of the end face part 35. Because the range of the formation of the groove portion 35a is limited to the region between the outer cylindrical part 33 and the heater 40, decrease in rigidity of the end face part 35 is suppressed and hence decrease in strength of the roller main body 31 is suppressed.

In the present embodiment, the groove portion 35a is deepest at the outermost part in the radial direction. Because the depth of the groove portion 35a is arranged in this way, the capacity of the groove portion 35a is small. For this reason, decrease in rigidity of the end face part 35 is suppressed and hence decrease in strength of the roller main body 31 is suppressed. Furthermore, because the groove portion 35a is deepest at the outermost part in the radial direction, the magnetic flux circumventing the deepest part of the groove portion 35a toward the leading end side is guided to pass through leading end portion of the outer cylindrical part 33. Heat generation at the leading end portion of the outer cylindrical part 33 is therefore facilitated, and the temperature distribution in the axial direction of the roller surface 31a is further effectively equalized.

In the present embodiment, a part of the end face part 35 where the groove portion 35a is not formed is thicker than the outer cylindrical part 33. This arrangement makes it possible to increase the rigidity of the end face part 35, and therefore to increase the strength of the roller main body 31.

In the present embodiment, a part of the end face part 35 where the groove portion 35a is formed is thinner than the outer cylindrical part 33. With this arrangement, the path of the magnetic flux passing at the deepest part of the groove portion 35a (i.e., the thinnest part of the end face part 35) is further shifted to the leading end side. Heat generation at the leading end portion of the roller main body 31 is therefore further facilitated, and the temperature distribution in the axial direction of the roller surface 31a is further effectively equalized.

In the present embodiment, the minimum thickness of the part of the end face part 35 where the groove portion 35a is formed is 3 millimeters or more. This arrangement makes it possible to avoid saturation of the magnetic flux at the thinnest part of the end face part 35, and to suppress the decrease in efficiency of the induction heating.

In the present embodiment, the groove portion 35a is filled with the non-magnetic member 36. As compared to a case where the groove portion 35a is a void space, it is possible to increase the rigidity of the end face part 35, and therefore to increase the strength of the roller main body 31.

In the present embodiment, the non-magnetic heat equalizing member 36 which has a higher thermal conductivity in the axial direction than the thermal conductivity of at least the inner circumferential surface of the outer cylindrical part 33 is provided to be in contact with the inner circumferential surface of the outer cylindrical part 33, and as the non-magnetic member, a part of the heat equalizing member 36 is inserted into the groove portion 35a. Because of this heat equalizing member 36, it is possible to further effectively equalize the temperature distribution in the axial direction of the roller surface 31a. Furthermore, the groove portion 35a is advantageously reinforced by the heat equalizing member 36.

In the present embodiment, the heat equalizing member 36 is made of a fiber composite material. When the orientation of fibers in the fiber composite material is suitably arranged, the physical properties such as thermal conductivity and electric resistivity are anisotropic. The fiber composite material arranged in this way is suitable as a material of the heat equalizing member 36.

In the present embodiment, the fiber composite material is C/C composite (carbon fiber reinforced-carbon matrix-composite) including carbon fibers and graphite. The C/C composite has high thermal conductivity among fiber composite materials including carbon fibers, and has high heat resistance, too. Accordingly, when the heat equalizing member 36 is made of the C/C composite, the temperature distribution of the roller surface 31a is further effectively equalized and the induction heating roller 30 has high heat resistance.

In the present embodiment, the roller main body 31 is cantilevered at the end portion on the base end side (the other end side) in the axial direction. When the roller main body 31 is cantilevered at the base end portion, the leading end portion is a free end exposed to the outside air, and the temperature of the roller surface 31a tends to significantly decrease. The present invention which makes it possible to facilitate heat generation at the leading end portion of the roller main body 31 is therefore particularly effective.

In the present embodiment, plural yarns Y are wound onto the outer circumferential surface of the roller main body 31 to be aligned in the axial direction. In the present invention, it is possible to equalize the temperature distribution in the axial direction of the roller surface 31a. The yarns Y wound on the roller main body 31 are evenly heated, differences in quality between the yarns Y are suppressed, and consequently the quality of the yarns Y is improved.

### (Other Embodiments)

The following will describe modifications of the above-described embodiment.

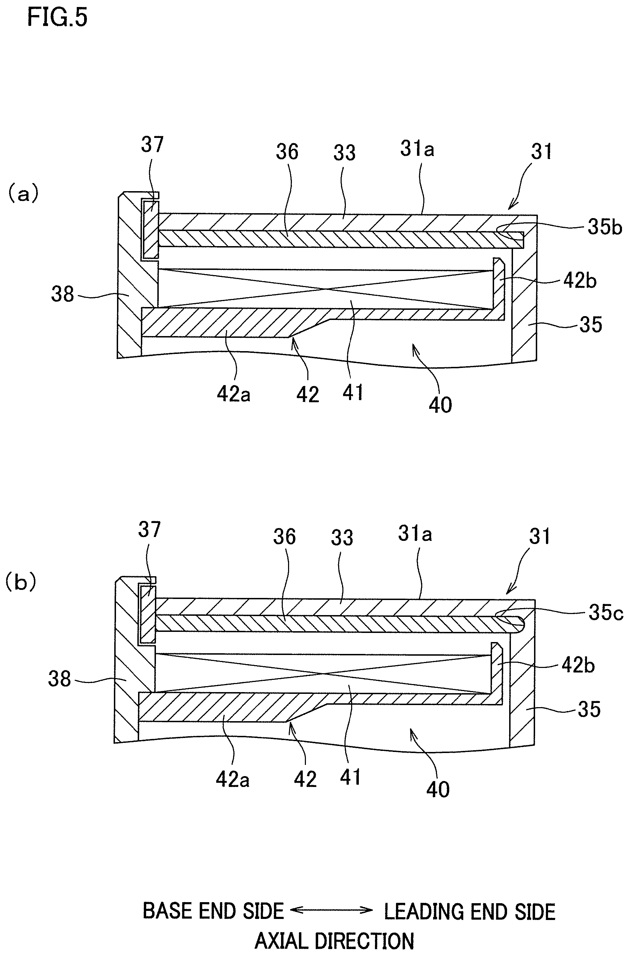

In the embodiment above, the groove portion 35a is triangular in shape in a cross section orthogonal to the circumferential direction. The groove portion 35a may be shaped differently. For example, a groove portion 35b may be rectangular in cross section as shown in FIG. 5(a), or a groove portion 35c may be circular-arc-shaped in cross section as shown in FIG. 5(b). The groove portion 35c may have a shape different from these shapes.

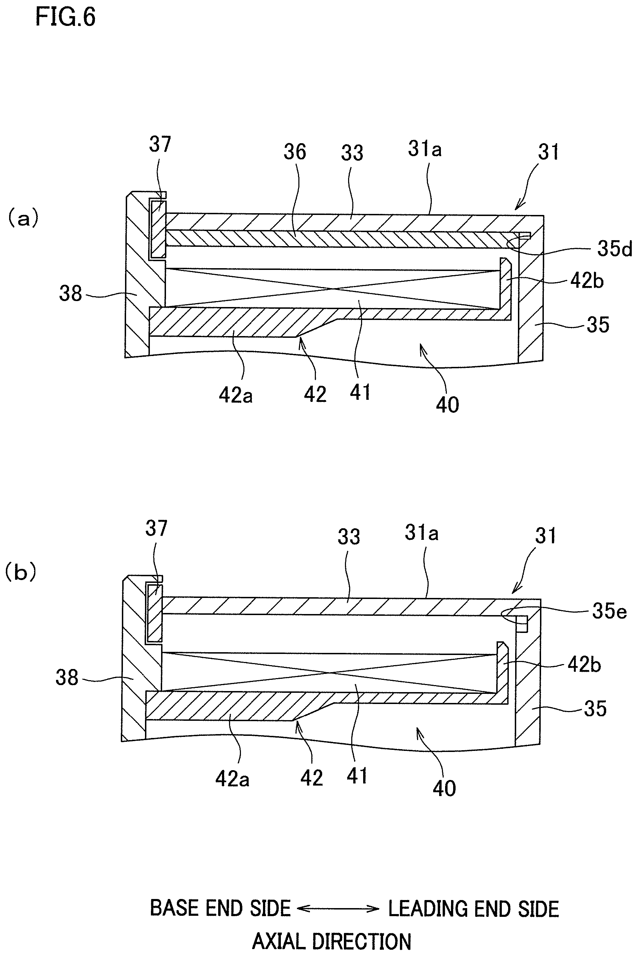

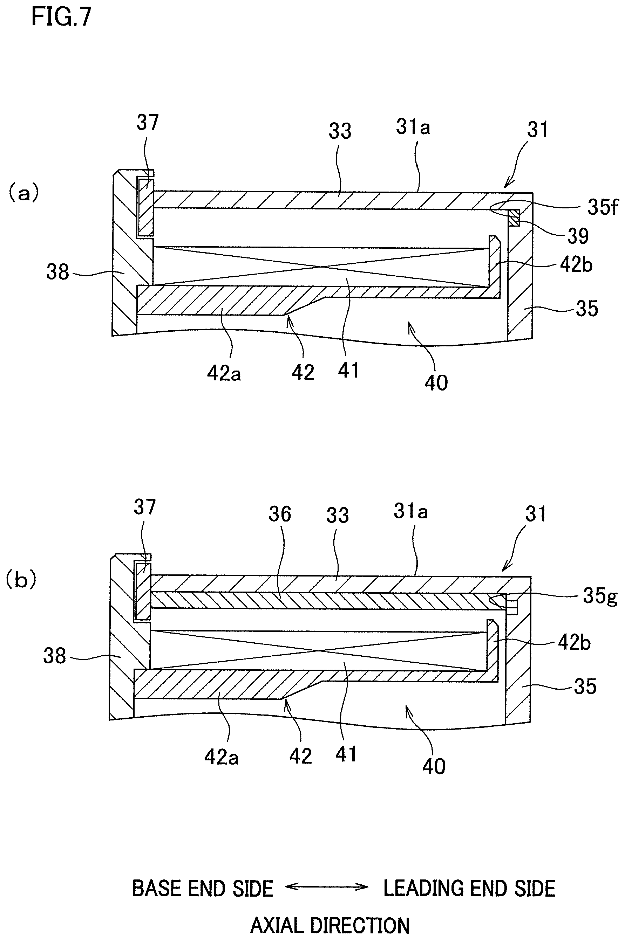

While in the embodiment above the leading end portion of the heat equalizing member 36 is inserted into the groove portion 35a, the disclosure is not limited to this arrangement. For example, the heat equalizing member 36 may not be inserted into a groove portion 35d as shown in FIG. 6(a), or the heat equalizing member 36 is omitted and nothing is inserted in a groove portion 35e as shown in FIG. 6(b). Even in a simple space such as the groove portions 35d and 35e, the relative permeability of air is lower than that of the roller main body 31 (carbon steel). On this account, the magnetic flux passing through the end face part 35 makes a detour toward the leading end side to circumvent the groove portion 35d or 35e, with the result that heat generation at the leading end portion of the outer cylindrical part 33 is facilitated. Alternatively, as shown in FIG. 7(a), a groove portion 35f may be filled with a non-magnetic member 39 which is not a heat equalizing member. The expression "filled with" is not limited to a case where the groove portion 35a is entirely filled with a non-magnetic member, and encompasses a case where the groove portion 35a is partially filled with a non-magnetic member to the extent that the rigidity of the end face part 35 is improved.

In the embodiment above, the groove portion 35a is formed to be adjacent to the outer cylindrical part 33 of the roller main body 31 (i.e., formed at a corner portion between the outer cylindrical part 33 and the end face part 35). In this regard, the groove portion may not be formed to be adjacent to the outer cylindrical part 33. For example, as long as the groove portion is formed in a region between the outer cylindrical part 33 and the heater 40 in the radial direction, the groove portion may be separated from the outer cylindrical part 33 as indicated by a groove portion 35g shown in FIG. 7(b). Also in this case, heat is generated at an the leading end portion of the end face part 35 and hence heating of the leading end portion of the outer cylindrical part 33 is facilitated by heat conduction from the end face part 35.

In the embodiment above, the groove portion 35a is an uninterrupted annular groove extending in the circumferential direction. In this regard, the groove portion may not be annular in shape. The groove portion may be disconnected in part in the circumferential direction, or may be grooves formed by dividing an annular groove in the circumferential direction.

In the embodiment above, the heat equalizing member 36 is made of the C/C composite. Alternatively, the heat equalizing member 36 may be made of a CFRP (carbon fiber reinforced plastic) including carbon fibers and resin. CFRP is inferior to C/C composite in heat resistance but is cheaper than C/C composite. When the induction heating roller 30 is not required to have high heat resistance, cost reduction is achieved by making the heat equalizing member 36 of CFRP.

The heat equalizing member 36 may be made of not a fiber composite material such as C/C composite and CFRP but a non-magnetic metal material such as aluminum and copper, which has higher thermal conductivity than at least the inner circumferential surface of the outer cylindrical part 33 (carbon steel). Processing of metal materials is typically easier than processing of fiber composite materials. For this reason, the heat equalizing member 36 can be easily shaped when the heat equalizing member 36 is made of a metal material.

In the embodiment above, the roller main body 31 is cantilevered. Alternatively, the roller main body 31 may be supported on both sides.

In the embodiment above, yarns Y are wound on the outer circumferential surface of the induction heating roller 30. In this regard, the number of yarns Y wound on the outer circumferential surface of the induction heating roller 30 may be one.

The embodiment above describes the induction heating roller 30 configured to heat the yarns Y. In this regard, the use of the induction heating roller 30 is not limited for heating the yarns Y. The roller may be used for heating materials other than the yarns Y, such as a film, paper, nonwoven fabric, a sheet such as a resin sheet, and a toner image on a sheet in a photocopier.

### [Reference Signs List]

- 3: spun yarn drawing device
- 30: induction heating roller
- 31: roller main body
- 31a: roller surface
- 33: outer cylindrical part (heating target)
- 35: end face portion
- 35a to 35g: groove portions
- 36: heat equalizing member (non-magnetic member)
- 40: heater
- 41: coil
- Y: yarn

## Claims

1. An induction heating roller (30) comprising:
a roller main body (31) including a cylindrical heating target (33) and an end face part connected to an end portion of the heating target (33) on one end side in an axial direction; and a heater (40) including a coil (41) which is provided inside the roller main body (31),
the heating target (33) being induction-heated as an alternate current is supplied to the coil (41),
in a region between the heating target (33) and the heater (40) in a radial direction in an inner surface of the end face part, a groove portion (35a) being formed to extend in a circumferential direction
wherein the induction heating roller (30) comprises a non-magnetic heat equalizing member (36) which is provided to be in contact with an inner circumferential surface of the heating target (33);
**characterized in that** the heat equalizing member (36) is made of a fiber composite material so that the heat equalizing member (36) is higher in thermal conductivity in the axial direction than at least the inner circumferential surface of the heating target (33).

2. The induction heating roller (30) according to claim 1, wherein the groove portion (35a) is filled with a non-magnetic member, and as the non-magnetic member, a part of the heat equalizing member (36) is inserted into the groove portion (35a).

3. The induction heating roller (30) according to claim 1 or 2, wherein, the groove portion (35a) is an uninterrupted annular groove extending in the circumferential direction.

4. The induction heating roller (30) according to any one of claims 1 to 3, wherein, the groove portion (35a) is formed to be adjacent to the heating target (33).

5. The induction heating roller (30) according to any one of claims 1 **to 4,** wherein, the groove portion (35a) is formed only in the region between the heating target (33) and the heater (40) in the radial direction, in the inner surface of the end face part.

6. The induction heating roller (30) according to any one of claims 1 **to 5,** wherein, the groove portion (35a) is deepest at an outermost part in the radial direction.

7. The induction heating roller (30) according to any one of claims 1 **to 6,** wherein, a part of the end face part where the groove portion (35a) is not formed is thicker than the heating target (33).

8. The induction heating roller (30) according to any one of claims 1 to 7, wherein, the minimum thickness of a part of the end face part where the groove portion (35a) is formed is less than the thickness of the heating target (33).

9. The induction heating roller (30) according to any one of claims 1 **to 8,** wherein, the minimum thickness of the part of the end face part where the groove portion (35a) is formed is 3 millimeters or more.

10. The induction heating roller (30) according to any one of claims 1 **to 9,** wherein, the roller main body (31) is cantilevered at an end portion on the other end side in the axial direction.

11. A spun yarn drawing device (3) comprising the induction heating roller (30) of any one of claims 1 to 10,
yarns being wound on an outer circumferential surface of the roller main body (31) to be aligned in the axial direction.

## Patentansprüche

1. Induktionsheizrolle (30), die Folgendes umfasst:
einen Rollenhauptkörper (31), der ein zylindrisches Heiztarget (33) und ein Endflächenteil einschließt, das mit einem Endabschnitt des Heiztargets (33) an einer Endseite in einer axialen Richtung verbunden ist; und eine Heizvorrichtung (40), die eine Spule (41) einschließt, die innerhalb des Rollenhauptkörpers (31) vorgesehen ist,
wobei das Heiztarget (33) durch Induktion erhitzt wird, wenn die Spule (41) mit einem Wechselstrom versorgt wird,
wobei in einem Bereich zwischen dem Heiztarget (33) und der Heizvorrichtung (40) in einer radialen Richtung in einer Innenfläche des Endflächenteils ein Nutabschnitt (35a) ausgebildet ist, der sich in einer Umfangsrichtung erstreckt,
wobei die Induktionsheizrolle (30) ein nichtmagnetisches Wärmeausgleichselement (36) umfasst, das so vorgesehen ist, dass es in Kontakt mit einer inneren Umfangsfläche des Heiztargets (33) steht;
**dadurch gekennzeichnet, dass** das Wärmeausgleichselement (36) aus einem Faserverbundmaterial hergestellt ist, sodass das Wärmeausgleichselement (36) eine höhere Wärmeleitfähigkeit in axialer Richtung aufweist als zumindest die innere Umfangsfläche des Heiztargets (33).

2. Induktionsheizrolle (30) nach Anspruch 1, wobei der Nutabschnitt (35a) mit einem nichtmagnetischen Element gefüllt ist und als das nichtmagnetische Element ein Teil des Wärmeausgleichselements (36) in den Nutabschnitt (35a) eingesetzt ist.

3. Induktionsheizrolle (30) nach Anspruch 1 oder 2, wobei der Nutabschnitt (35a) eine durchgehende ringförmige Nut ist, die sich in Umfangsrichtung erstreckt.

4. Induktionsheizrolle (30) nach einem der Ansprüche 1 bis 3, wobei der Nutabschnitt (35a) so ausgebildet ist, dass er an das Heiztarget (33) angrenzt.

5. Induktionsheizrolle (30) nach einem der Ansprüche 1 bis 4, wobei der Nutabschnitt (35a) nur in dem Bereich zwischen dem Heiztarget (33) und der Heizvorrichtung (40) in radialer Richtung in der Innenfläche des Endflächenteils ausgebildet ist.

6. Induktionsheizrolle (30) nach einem der Ansprüche 1 bis 5, wobei der Nutabschnitt (35a) an einem äußersten Teil in radialer Richtung am tiefsten ist.

7. Induktionsheizrolle (30) nach einem der Ansprüche 1 bis 6, wobei ein Teil des Endflächenteils, an dem der Nutabschnitt (35a) nicht ausgebildet ist, dicker ist als das Heiztarget (33).

8. Induktionsheizrolle (30) nach einem der Ansprüche 1 bis 7, wobei die Mindestdicke eines Teils des Endflächenteils, in dem der Nutabschnitt (35a) ausgebildet ist, geringer ist als die Dicke des Heiztargets (33).

9. Induktionsheizrolle (30) nach einem der Ansprüche 1 bis 8, wobei die Mindestdicke des Endflächenteils, in dem der Nutabschnitt (35a) ausgebildet ist, 3 Millimeter oder mehr beträgt.

10. Induktionsheizrolle (30) nach einem der Ansprüche 1 bis 9, wobei der Rollenhauptkörper (31) an einem Endabschnitt auf der anderen Endseite in axialer Richtung freitragend ist.

11. Garnstreckvorrichtung (3) umfassend die Induktionsheizrolle (30) nach einem der Ansprüche 1 bis 10, wobei die Garne auf eine äußere Umfangsfläche des Rollenhauptkörpers (31) gewickelt werden, um in axialer Richtung ausgerichtet zu sein.

## Revendications

1. Rouleau chauffant par induction (30) comprenant :
un corps principal de rouleau (31) incluant une cible de chauffage (33) cylindrique et une partie de face d'extrémité reliée à une portion d'extrémité de la cible de chauffage (33) sur un côté d'extrémité dans une direction axiale ; et un dispositif de chauffage (40) incluant une bobine (41) qui est prévue à l'intérieur du corps principal de rouleau (31),
la cible de chauffage (33) étant chauffée par induction lorsqu'un courant alternatif est alimenté vers la bobine (41),
dans une région entre la cible de chauffage (33) et le dispositif de chauffage (40) dans une direction radiale dans une surface intérieure de la partie de face d'extrémité, une portion de rainure (35a) étant formée pour s'étendre dans une direction circonférentielle,
dans lequel le rouleau chauffant par induction (30) comprend un élément d'égalisation de chauffage (36) non-magnétique qui est prévu pour être en contact avec une surface circonférentielle intérieure de la cible de chauffage (33) ; **caractérisé en ce que** l'élément d'égalisation de chauffage (36) est constitué d'un matériau composite en fibres de sorte que l'élément d'égalisation de chauffage (36) ait une conductivité thermique plus élevée dans la direction axiale qu'au moins la surface circonférentielle intérieure de la cible de chauffage (33).

2. Rouleau chauffant par induction (30) selon la revendication 1, dans lequel la portion de rainure (35a) est remplie d'un élément non-magnétique, et en tant qu'élément non-magnétique, une partie de l'élément d'égalisation de chauffage (36) est insérée dans la portion de rainure (35a).

3. Rouleau chauffant par induction (30) selon la revendication 1 ou la revendication 2, dans lequel la portion de rainure (35a) est une rainure annulaire ininterrompue s'étendant dans la direction circonférentielle.

4. Rouleau chauffant par induction (30) selon l'une quelconque des revendications 1 à 3, dans lequel la portion de rainure (35a) est formée pour être adjacente à la cible de chauffage (33).

5. Rouleau chauffant par induction (30) selon l'une quelconque des revendications 1 à 4, dans lequel la portion de rainure (35a) est formée uniquement dans la région entre la cible de chauffage (33) et le dispositif de chauffage (40) dans la direction radiale, dans la surface intérieure de la partie de face d'extrémité.

6. Rouleau chauffant par induction (30) selon l'une quelconque des revendications 1 à 5, dans lequel la portion de rainure (35a) est la plus profonde au niveau d'une partie la plus extérieure dans la direction radiale.

7. Rouleau chauffant par induction (30) selon l'une quelconque des revendications 1 à 6, dans lequel une partie de la partie de face d'extrémité où la portion de rainure (35a) n'est pas formée est plus épaisse que la cible de chauffage (33).

8. Rouleau chauffant par induction (30) selon l'une quelconque des revendications 1 à 7, dans lequel l'épaisseur minimale d'une partie de la partie de face d'extrémité où la portion de rainure (35a) est formée est inférieure à l'épaisseur de la cible de chauffage (33).

9. Rouleau chauffant par induction (30) selon l'une quelconque des revendications 1 à 8, dans lequel l'épaisseur minimale de la partie de la partie de face d'extrémité où la portion de rainure (35a) est formée est supérieure ou égale à 3 millimètres.

10. Rouleau chauffant par induction (30) selon l'une quelconque des revendications 1 à 9, dans lequel le corps principal de rouleau (31) est en porte-à-faux au niveau d'une portion d'extrémité sur l'autre côté d'extrémité dans la direction axiale.

11. Dispositif d'étirage de filé de fibres (3) comprenant le rouleau chauffant par induction (30) selon l'une quelconque des revendications 1 à 10,
les fils étant enroulés sur une surface circonférentielle extérieure du corps principal de rouleau (31) pour être alignés dans la direction axiale.
